# EUROPÄISCHE PATENTSCHRIFT

(11) **EP 1 941 138 B1**
(45) Veröffentlichungstag und Bekanntmachung des Hinweises auf die Patenterteilung: **10.03.2010**
(21) Anmeldenummer: 06819164.2
(22) Anmeldetag: 26.10.2006
(51) Int. Cl.: F02B 37/16, F16K 31/06

(54) **SCHUBUMLUFTVENTIL FÜR BRENNKRAFTMASCHINEN MIT EINEM TURBOLADER**
AMBIENT-AIR PULSED VALVE FOR INTERNAL COMBUSTION ENGINES EQUIPPED WITH A TURBOCHARGER
SOUPAPE DE SURPRESSION DESTINEE A DES MOTEURS A COMBUSTION INTERNE COMPORTANT UN TURBOCOMPRESSEUR

(30) Priorität: 29.10.2005 DE 102005051971
(43) Veröffentlichungstag der Anmeldung: 09.07.2008
(73) Patentinhaber: Pierburg GmbH, 41460 Neuss (DE)
(72) Erfinder: THIERY, Michael, 41564 Kaarst (DE); HERRMANN, Max, 41468 Neuss (DE); KRAUSE, Harald, 41515 Grevenbroich (DE); DISMON, Heinrich, 52538 Gangelt (DE); NOWAK, Martin, 40476 Düsseldorf (DE); LAPPAN, Rolf, 50733 Köln (DE)
(74) Vertreter: Ter Smitten, Hans
(86) Internationale Anmeldenummer: PCT/EP2006/067833
(87) Internationale Veröffentlichungsnummer: WO 2007/048828

(56) Entgegenhaltungen:
- WO-A-2006/029814
- WO-A-2006/133986
- DE-A1- 10 020 041
- DE-A1- 10 248 125
- GB-A- 2 338 050

## Beschreibung

Die Erfindung betrifft ein Schubumluftventil für Brennkraftmaschinen mit einem Turbolader gemäß dem Oberbegriff des Anspruchs 1.

Derartige Schubumluftventile sind hinlänglich bekannt und werden insbesondere in der DE 100 20 041 C2 beschrieben. Die Verbindung zwischen der Druckseite und der Ansaugseite einer Ladedruckpumpe eines Turboladers durch eine Bypassleitung wird für den Übergang von einer hohen Last in den Schubbetrieb der Brennkraftmaschine benötigt, um eine hohe Förderung der Ladedruckpumpe gegen eine geschlossene Drosselklappe und den daraus entstehenden Pumpeffekt sowie ein zu starkes plötzliches Absenken der Turbodrehzahl mit den Folgen thermodynamischer Probleme zu verhindern. Das in der DE 100 20 041 C2 beschriebene Schubumluftventil weist Druckausgleichsbohrungen auf, die gewährleisten, dass sich trotz des Differenzdrucks zwischen' Druck- und Ansaugseite der Ladedruckpumpe ein Druckgleichgewicht in Schließstellung am Ventilverschlusskörper einstellt.

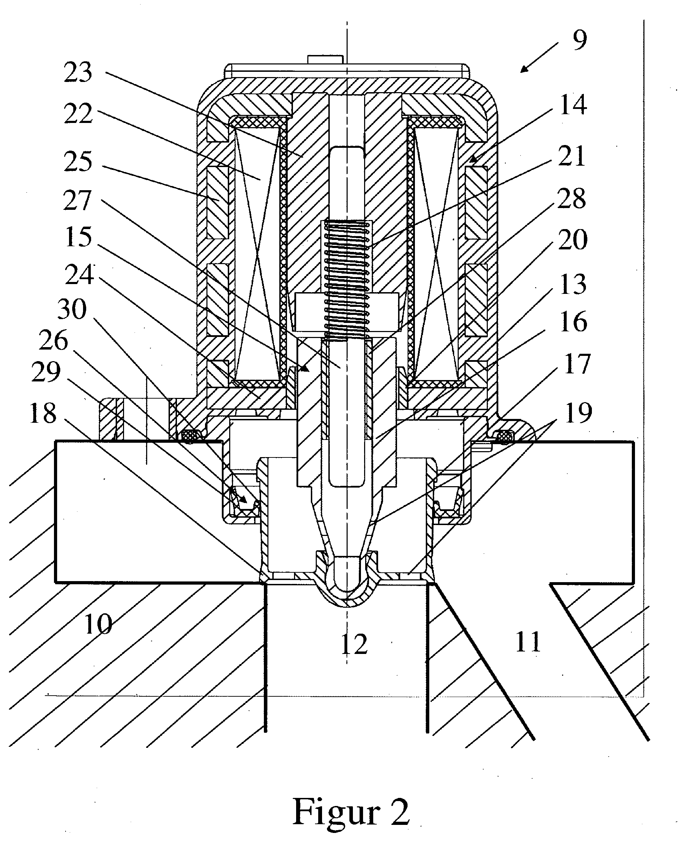

Da zur Berechnung des Druckgleichgewichtes alle druckbelasteten Flächen heran gezogen werden, kann das Schubumluftventil gemäß Figur 2 der oben genannten Patentschrift lediglich den Kanal der zur Ansaugseite führt als Ventilsitz nutzen, da für ein Zusammenwirken des Ventils mit dem Kanal der zur Druckseite führt eine andere Form der Membrane 25 bedingen würde.

Der Erfindung liegt daher die Aufgabe zugrunde, ein Schubumluftventil zu verschaffen, dass sowohl mit der Druckseite der Ladedruckpumpe als auch der Ansaugseite zusammen wirken kann.

Diese Aufgabe wird durch den kennzeichnenden Teil des Anspruchs 1 gelöst. Auf diese Weise ist gewährleistet, dass auf einfache Weise das Schubumluftventil sowohl mit der Druckseite der Ladedruckpumpe als auch mit der Ansaugseite verbunden werden kann. Dadurch, dass sich die Mantelfläche in Richtung des Abdichtelementes leicht konisch verjüngt, ist die Mantelfläche besonders einfach als Spritzgussteil herzustellen. Durch den Radialdichtring erfolgt eine besonders einfache und kostengünstige Abdichtung zwischen der Ventileinheit und dem Gehäuse. Ein derartiges mit einem Radialdichtring versehenes Schubumluftventil kann sowohl mit der Druckseite als auch der Ansaugseite der Ladedruckpumpe korrespondieren. Eine besonders einfach zu realisierende Ausführung ergibt sich, wenn der Radialdichtring an dem Verschlußkörper anliegt. Um ein Druckgleichgewicht an der beweglichen Ventileinheit zu gewährleisten, ist es vorteilhaft, wenn der Innendurchmesser des Radialdichtringes gleich dem wirksamen Durchmesser des kreisrunden Abdichtelementes ist.

Es ist vorgesehen, dass der Ventilverschlusskörper konisch geformt ist. Durch das konische Ausformen der Fläche des Ventilverschlusskörpers kann die Anpresskraft zwischen dem Radialdichtring und dem Ventilverschlusskörper mit zunehmendem Schub abnehmen, das dazu führt, dass die resultierende Reibungskraft gegen 0 geht. Hierdurch ändert sich der Kraftbedarf des Schubumluftventils zum Überwinden der Rafftreibung bei geschlossenem Ventil zwar nicht, jedoch muss über den gesamten Verwahrweg wesentlich weniger Arbeit geleistet werden. In der Folge kann die Öffnungscharakteristik des Schubumluftventils durch Modifikation der Geometrie des Ventilverschlusskörpers dahingehend verändert werden, dass dem Schubumluftventil im geschlossenen Zustand mehr Schließkraft zur Verfügung steht.

Des Weiteren hat es sich als vorteilhaft erwiesen, dass ein nach außen gerichteter erster Schenkel des Radialdichtringes in etwa zwei- bis fünffach so lang ist, wie ein zweiter nach innen gerichteter Schenkel des Radialdichtringes. Hierdurch können im Wesentlichen die durch den Turbodruck steigenden Anpresskräfte des Radialdichtringes an dem Ventilverschlusskörper minimiert werden.

Eine andere Form der Abdichtung kann dadurch erreicht werden, dass das Gehäuse in Höhe des Ventilverschlusskörpers einen zylinderförmigen Gehäuseteil aufweist, dessen innere Mantelfläche im gleichen Maße, wie die äußere Mantelfläche des Ventilverschlusskörpers, konisch verjüngt ist.

Um auch während der Öffnungs- oder Schließphase einen Druckgleichgewicht am Ventilverschlusskörper zu gewährleisten ist es vorteilhaft, dass die Druckausgleichsöffnungen im Ventilverschlusskörper in Richtung des elektromagnetischen Antriebs von dem Abdichtelement beabstandet sind.

Ein Ausführungsbeispiel der Erfindung ist dargestellt und wird nachfolgend beschrieben.

Die Zeichnung zeigt:
Figur 1 eine schematische Darstellung einer Brennkraftmaschine mit einem Turbolader,
Figur 2 eine Schnittansicht eines erfindungsgemäßen Schubumluftventils,
Figur 3 eine Schnittansicht einer alternativen Ausführungsform eines erfindungsgemäßen Schubumluftventils und
Figur 4 eine Detailansicht einer vorteilhaften Ausführungsform des Verschlusskörpers.

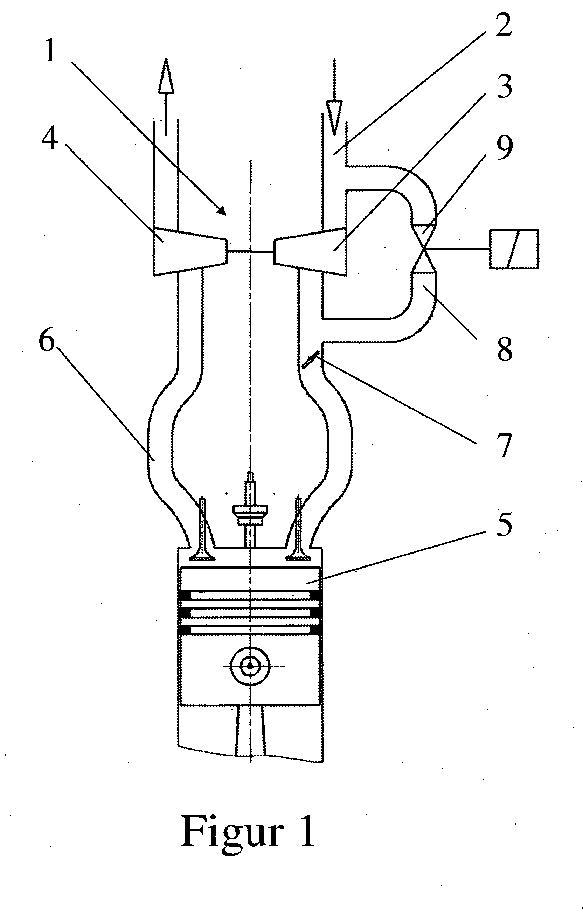

Figur 1 zeigt die schematische Darstellung einer nicht näher dargestellten Brennkraftmaschine mit einem Turbolader 1. Über eine Ansaugleitung 2 wird Umgebungsluft angesaugt und durch den Verdichter 3, der durch eine abgasseitige Turbine 4 angetrieben wird, verdichtet und nachfolgend dem Brennraum 5 der Brennkraftmaschine zugeführt. Über die Abgasleitung 6 und die Turbine 4 wird das Abgas dann aus dem Brennraum 5 abgeführt. Die Regelung der dem Brennraum 5 zuzuführenden Ansaugluft findet durch eine Drosselklappe 7 statt. Um bei einer schnell schließenden Drosselklappe, beispielsweise ausgelöst durch plötzliches Abbremsen, einen Pump-Effekt des weiterdrehenden Turboladers gegen die geschlossene Drosselklappe 7 zu verhindern, ist auf bekannte Weise eine Bypassleitung 8 mit einem Schubumluftventil 9 vorgesehen. Über diese Bypassleitung 8 kann verdichtete Ansaugluft wieder in den Bereich der Ansaugleitung 2 vor dem Verdichter 3 zurückgeführt werden.

Figur 2 zeigt nun eine erste Ausführungsform eines erfindungsgemäßen Schubumluftventils 9 im Schnitt. Im vorliegenden Beispiel ist das Schubumluftventil 9 direkt an ein Gehäuse 10 der Ladedruckpumpe 3 angeflanscht. Das Schubumluftventil trennt dabei eine Druckseite 12 von der Ansaugseite 11 der Ladedruckpumpe 3. Wird nun die Brennkraftmaschine, beispielsweise aufgrund einer gefährlichen Verkehrssituation, plötzlich abgebremst und die Drosselklappe 7 geschlossen, wird die Druckseite 12 mit der Ansaugseite 11 verbunden, um aufgeladene Luft zur Ansaugseite der Ladedruckpumpe 3 zurückzuführen, und damit den so genannten "Pump-Effekt" der bei einer geschlossenen Drosselklappe 7 auftreten kann zu vermeiden.

Das erfindungsgemäße Schubumluftventil 9 besteht im Wesentlichen aus einem Gehäuse 13, das eine elektromagnetische Antriebseinheit 14 und eine im Gehäuse 13 bewegliche Ventileinheit 15. Die bewegliche Ventileinheit 15 besteht dabei im Wesentlichen aus einer gleichzeitig als Anker wirkende Ventilstange 16 und einem sich daran anschließendem Ventilverschlusskörper 17, der ein kreisrundes Abdichtelement 18 aufweist und dessen Ansaugfläche konisch geformt ist. Um Schließ- oder Öffnungskräfte so gering wie möglich zu halten und damit den elektromagnetischen Antrieb 14 so klein wie möglich auslegen zu können, sind Druckausgleichsöffnungen 19 vorgesehen, die dafür sorgen, dass das bewegliche Ventilteil von allen Seiten die gleiche Druckbeaufschlagung erfährt. In diesem Zusammenhang sollte es deutlich sein, dass der Verschlusskörper 17 hohl und nach unten offen ausgeführt ist.

Der elektromagnetische Antrieb 14 besteht im Wesentlichen aus einer Spule 22, einem Kern 23, einem Rückschlussblech 24 und einem Joch 25. Der Anker, der bei Bestromung der Spule 22 vom Kern 23 angezogen wird, wird im vorliegenden Fall, wie schon erwähnt, durch die Ventilstange 16 gebildet. Dabei sind die Ventilstange 16 und damit der Ventilverschlusskörper 17 durch eine Druckfeder 21, die sich am Kern 23 abstützt, in Schließstellung vorgespannt. Dadurch ist gewährleistet, dass im unbestromten Zustand das Abdichtelement 18 gegen einen Ventilsitz des Gehäuses 10 der Ladedruckpumpe 3 gedrückt wird und damit die Ansaugleitung von der Druckluftleitung trennt. Die Ventilstange 16 ist mittels einer Führungsbuchse 20 im Gehäuse 13 derart gelagert, dass bei Bestromung der Spule 22 die bewegliche Ventileinheit 15 in Richtung des Kernes 23 bewegt wird und auf diese Weise die Bypassleitung 8 frei gegeben wird. In der vorliegenden Ausführungsform ist die Druckfeder 21 auf einem fest mit dem Gehäuse 13 verbundenen Zapfen 27 angeordnet. Auf dem unteren Teil des Zapfens 27 gleitet auch die Ventilstange 16 mittels einer eingepressten Lagerbuchse 28, an den sich wiederum die Druckfeder 21 abstützen kann.

Über die Druckausgleichsöffnungen 19 und entlang der Ventilstange 16 im Bereich der Führungsbuchse 20 findet ein Druckausgleich derart statt, dass die bewegliche Ventileinheit 15 sich immer im Druckgleichgewicht befindet. Das heißt, das im geschlossenen Zustand des Schubumluftventils 9 das bewegliche Ventilteil mit dem Druck der Ansaugleitung 2 beaufschlagt ist. Gegenüber dem Druck der Druckleitung ist die bewegliche Ventileinheit durch einen Radialdichtring 26 fluiddicht abgeschlossen. Dies bietet den großen Vorteil, das im vorliegenden Ausführungsbeispiel lediglich die radial abstehende Fläche des Verschlusskörpers 17 durch den hohen Druck der Druckleitung beaufschlagt ist. Hier gleichen sich jedoch die Kräfte, die von oben und von unten auf diese Fläche wirken aus. Eine weitere Beaufschlagung eines Membrankörpers, wie sie im Stand der Technik vorliegt, erfolgt hierbei nicht. Dementsprechend ist auch keine komplizierte Auslegung eines Membrankörpers abhängig von der Einbausituation, notwendig. Im vorliegenden Fall ist ein nach außen gerichteter erster Schenkel 29 in etwa doppelt so lang wie ein zweiter Schenkel 30 des Radialdichtringes 26. Auch verjüngt sich die Mantelfläche des Ventilverschlußkörpers 17 in Richtung des Abdichtelementes 18, was eine Verringerung der Reibungskräfte zur Folge hat.

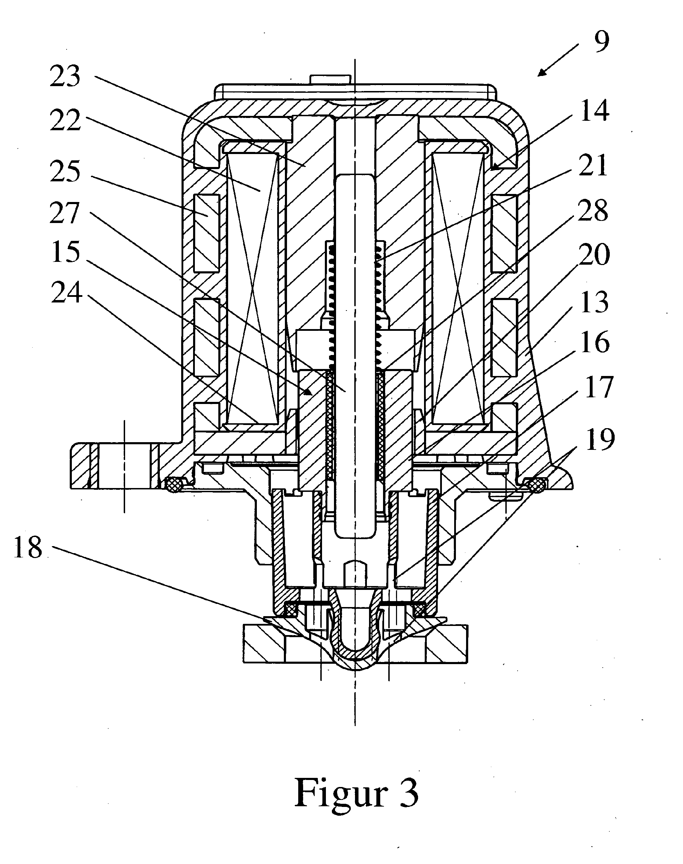

Figur 3 zeigt eine alternative Ausführungsform des erfindungsgemäßen Schubumluftventils 9. Hierbei ist kein Radialdichtring 26 vorgesehen, sondern ein Gehäuseteil des Gehäuses 13, dass in Höhe des Ventilverschlusskörpers 17 eine innere Mantelfläche aufweist, die sich in gleichem Maße konisch verjüngt, wie die äußere Mantelfläche des Ventilverschlusskörpers 17. Durch diese Anordnung kann einerseits eine ausreichende Abdichtung gewährleistet werden, andererseits ist sie kostengünstig im Montagespritzverfahren herzustellen.

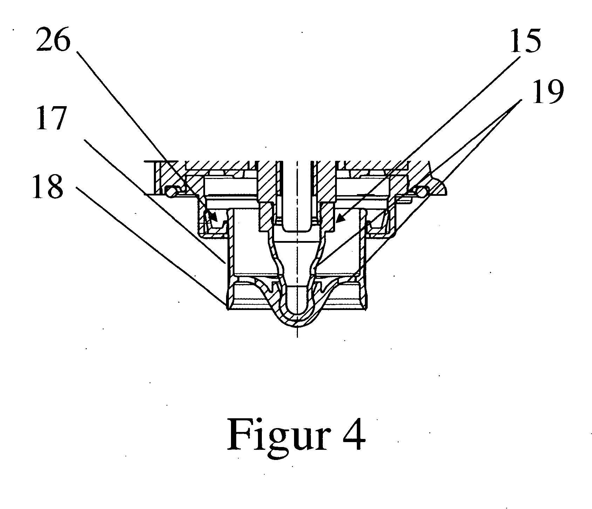

Figur 4 zeigt eine Detailansicht einer vorteilhaften Ausführungsform des Ventilverschlußkörpers 17. Hierbei sind die im Ventilverschlusskörper 17 angeordneten Druckausgleichsöffnungen in Richtung des in dieser Ansicht nicht dargestellten elektromagnetischen Antriebs 14 von dem Abdichtelement 18 beabstandet. Auf diese Weise wird verhindert, dass bei Öffnung des Schubumluftventils 9 durch die hohe Strömungsgeschwindigkeit und den damit verbundenen geringeren Druck das Druckgleichgewicht kurzfristig gestört wird, da die Fläche, auf die der geringere Druck wirkt, auf das sehr kleine Abdichtelement 18 des Ventilverschlusskörpers 17 minimiert wird. Hinter dem Abdichtelement 18 fällt der dynamische Druck entsprechend und der statische Druck steigt und wirkt in bekannter Weise an der Unterseite des Ventilverschlusskörpers 17.

Es sollte deutlich sein, dass der Einsatz eines derartigen Ventilverschlusskörpers natürlich auch bei der Ausführungsform gemäß Figur 3 einzusetzen ist.

## Patentansprüche

1. Schubumluftventil für Brennkraftmaschinen mit einem Turbolader (1), wobei das Schubumluftventil (9) in einem Bypasskanal (2) zwischen einer Druckseite (12) und einer Ansaugseite (11) einer Ladedruckpumpe (3) des Turboladers (1) angeordnet ist, mit einem Gehäuse (10), das eine elektromagnetische Antriebseinheit (14) und eine darin bewegliche Ventileinheit (15), die im Wesentlichen aus einer Ventilstange (16) und einem sich daran anschließenden Ventilverschlusskörper (17) mit einem kreisrunden Abdichtelement (18) besteht, aufweist, wobei Mittel (21) vorgesehen sind, die die bewegliche Ventileinheit (15) in unbestromten Zustand in Schließstellung halten, wobei mindestens eine Druckausgleichsöffnung (19) an der beweglichen Ventileinheit (15) vorgesehen ist, wobei der Ventilverschlusskörper (17) eine zylinderförmige Mantelfläche aufweist, die mit Mitteln derart zusammenwirkt, dass ein Gehäuseinnenraum gegenüber der Druckseite (12) oder der Ansaugseite (11) abgedichtet ist, **dadurch gekennzeichnet, dass** die zylinderförmige Mantelfläche sich in Richtung des Abdichtelementes (18) leicht konisch verjüngt.

2. Schubumluftventil nach Anspruch 1, **dadurch gekennzeichnet, dass** ein Radialdichtring (26) an der Mantelfläche des Ventilverschlusskörpers (17) anliegt.

3. Schubumluftventil nach Anspruch 2, **dadurch gekenntzeichnet**, **dass** der Innendurchmesser des Radialdichtringes (26) gleich dem wirksamen Durchmesser des kreisrunden Abdichtelementes (18) ist, derart, daß ein Druckgleichgewicht an der beweglichen Ventileinheit (15) gewährleistet ist.

4. Schubumluftventil nach Anspruch 2 oder 3, **dadurch gekenntzeichnet**, **dass** ein nach außen gerichteter erster Schenkel (29) des Radialdichtringes (26) in etwa zwei- bis fünffach so lang ist, wie ein zweiter nach innen gerichteter Schenkel (30) des Radialdichtringes (26).

5. Schubumluftventil nach Anspruch 1, **dadurch gekennzeichnet, dass** das Gehäuse (13) in Höhe des Ventilverschlusskörpers (17) einen zylinderförmigen Gehäuseteil aufweist dessen innere Mantelfläche in gleichem Maße wie die äußere Mantelfläche des Ventilverschlusskörpers konisch verjüngt ist.

6. Schubumluftventil nach einem der vorherigen Ansprüche, **dadurch gekennzeichnet, dass** die Druckausgleichsöffnungen (19) im Ventilverschlusskörper in Richtung des elektromagnetischen Antriebs (14) von dem Abdichtelement (18) beabstandet sind.

## Claims

1. A divert-air valve for internal combustion engines having a turbocharger (1), said divert-air valve (9) being arranged in a bypass channel (2) between a pressure side (12) and an intake side (11) of a charge pressure pump (3) of the turbocharger (1), comprising a housing (10) having an electromagnetic drive unit (14) and a valve unit (15) movable therein, which valve unit substantially comprises a valve rod (16) and an adjoining valve closing body (17) with a circular sealing element (18), wherein means (21) are provided which, in the non-energized state, keep the movable valve unit (15) in the closed position, wherein at least one pressure balancing opening (19) is provided at the movable valve unit (15), wherein the valve closing body (17) has a cylindrical shell surface cooperating with means such that an interior space of the housing is sealed against the pressure side (12) or the intake side (11), **characterized in that** the cylindrical shell surface is slightly tapered conically towards the sealing element (18).

2. The divert-air valve of claim 1, **characterized in that** a radial sealing ring (26) abuts against the shell surface of the valve closing body (17).

3. The divert-air valve of claim 2, **characterized in that** the inner diameter of the radial sealing ring (26) is equal to the effective diameter of the circular sealing element (18) such that a pressure balance is guaranteed at the movable valve unit (16).

4. The divert-air valve of claim 2 or 3, **characterized in that** an outward directed first leg (29) of the radial sealing ring (26) is about two to five times the length of an inward directed second leg (30) of the radial sealing ring (26).

5. The divert-air valve of claim 1, **characterized in that,** at the level of the valve closing body (17), the housing (13) has a cylinder-shaped housing part whose inner shell surface is tapered conically to the same extent as the outer shell surface of the valve closing body.

6. The divert-air valve of one of the preceding claims, **characterized in that** the pressure balancing openings (19) in the valve closing body are spaced from the sealing element (18) towards the electromagnetic drive (14).

## Revendications

1. Soupape de surpression destinée à des moteurs de combustion interne comportant un turbocompresseur (1), ladite soupape de surpression (9) étant disposée dans un conduit de dérivation (2) entre le côté de pression (12) et le côté d'aspiration (11) d'une pompe d'admission (3) du turbocompresseur (1), avec un boitier (10) comprenant une unité d'entrainement (14) électromagnétique et une unité de soupape (15) mobile dans celle-ci, l'unité de soupape étant sensiblement formée par une tige de soupape (16) et un corps de fermeture de soupape (17) bordant la tige et comprenant un élément d'étanchement (18) circulaire, des moyens (21) étant prévus, qui, en état non-alimenté, retiennent l'unité de soupape (15) mobile dans la position fermée, au moins une ouverture d'équilibre de pression (19) étant prévue à l'unité de soupape (15) mobile, ledit corps de fermeture de soupape (17) comprend une nappe cylindrique coopérant avec des moyens de sorte qu'un espace intérieur du boitier est étanché par rapport au côté de pression (12) ou au côté d'aspiration (11), **caractérisée en ce que** la nappe cylindrique est légèrement effilée de manière conique vers l'élément d'étanchement (18).

2. Soupape de surcompression selon la revendication 1, **caractérisée en ce qu'**une bague d'étanchéité radiale (26) reste sur la nappe du corps de fermeture de soupape (17).

3. Soupape de surcompression selon la revendication 2, **caractérisée en ce que** le diamètre intérieur de la bague d'étanchéité radiale (26) est égal au diamètre effectif dudit élément d'étanchement (18) circulaire de manière qu'un équilibre de pression est garanti au niveau de ladite unité de soupape (15) mobile.

4. Soupape de surcompression selon la revendication 2 ou 3, **caractérisée en ce que** la longueur d'une première aile (29) de la bague d'étanchéité radiale (26), tournée vers l'extérieur, est environ deux à cinq fois la longueur d'une deuxième aile (30) de la bague d'étanchéité radiale (26), tournée vers l'intérieur.

5. Soupape de surcompression selon la revendication 1, **caractérisée en ce que** le boitier (13) comprend une partie de boitier cylindrique au niveau du corps de fermeture de soupape (17), dont la nappe intérieure est effilée de manière conique d'autant que la nappe extérieure du corps de fermeture de soupape.

6. Soupape de surcompression selon l'une quelconque des revendications précédentes, **caractérisée en ce que** les ouvertures d'équilibre de pression (19) dans ledit corps de fermeture de soupape sont éloignées dudit élément d'étanchement (18) vers l'entrainement électromagnétique (14).
